# EUROPÄISCHE PATENTSCHRIFT

(11) **EP 1 086 658 B1**
(45) Veröffentlichungstag und Bekanntmachung des Hinweises auf die Patenterteilung: **16.06.2004**
(21) Anmeldenummer: 00890293.4
(22) Anmeldetag: 26.09.2000
(51) Int. Cl.: A61C 1/12, A61C 1/08, A61B 17/16

(54) **Zahnärztliches oder chirurgisches Winkelstück**
Dental or surgical angle handpiece
Contre-angle dentaire ou chirurgical

(30) Priorität: 27.09.1999 AT 165699; 17.04.2000 AT 6762000
(43) Veröffentlichungstag der Anmeldung: 28.03.2001
(73) Patentinhaber: W & H Dentalwerk Bürmoos GmbH, 5111 Bürmoos (AT)
(72) Erfinder: Schatz, Norbert, 5111 Bürmoos (AT); Kardeis, Richard, 5111 Bürmoos (AT); Bachmaier, Andreas, 51110 Oberndorf (AT)
(74) Vertreter: Patentanwälte BARGER, PISO & PARTNER

(56) Entgegenhaltungen:
- US-A- 4 382 790
- US-A- 4 403 959
- US-A- 5 741 263

## Beschreibung

Die Erfindung betrifft ein zahnärztliches oder chirurgisches Winkelstück, umfassend einen Kopfteil, einen Knieteil und einen Handteil, mit verbesserter Zerlegbarkeit.

Vorbekannte derartige Winkelstücke können durch das Lösen von Schrauben oder dergleichen zerlegt werden, was sich im Großen und Ganzen bewährt hat.

Im Zuge fortschreitend strenger werdender Hygienebestimmungen und vor allem bei chirurgischen Winkelstücken, die bei invasiven Operationen verwendet werden, ist es nun notwendig, eine derartige Zerlegung eines Winkelstückes wesentlich häufiger vorzunehmen als es noch vor einigen Jahren üblich war. Dies bringt es mit sich, daß der Zerlegungsvorgang als lästig empfunden wird, und daß Bedarf an einer Vereinfachung dieses Vorganges besteht.

Die Erfindung bezweckt ein Winkelstück zu schaffen, das diesen Forderungen entspricht und schlägt dazu vor, daß im Knieteil ein axial zwischen zwei Positionen, von denen die eine einer Verriegelt-Position und die andere einer Entriegelt-Position entspricht, beweglicher Käfig vorgesehen ist, in dem zumindest ein Verriegelungselement radial beweglich gelagert ist, das in Abhängigkeit von der Position, die der Käfig einnimmt, eine innere oder eine äußere Lage einnimmt, und daß im Knieteil zumindest ein längliches Betätigungsorgan im wesentlichen axial verschieblich gelagert ist, das einerends mit dem Käfig und anderends mit einer Betätigungsfläche des Handteiles zusammenwirkt.

Durch diese erfindungsgemäße Lösung kann das Handstück auf einfache Weise in seine drei Hauptbestandteile zerlegt werden, ohne daß dazu Werkzeug oder eine aufwendige Prozedur notwendig wäre.

In einer ersten Ausgestaltung der Erfindung ist das längliche Betätigungsorgan eine Zugstange und die Betätigungsfläche im Handteil Teil eines drehbaren Rastelementes. So kann durch Verdrehen des Handteiles gegenüber dem Knieteil die Zerlegung erfolgen.

In einer zweiten Ausgestaltung der Erfindung ist das längliche Betätigungsorgan eine Druckstange und die Betätigungsfläche im Handteil ist eine Stirnfläche. Bei dieser Ausgestaltung kann der Handteil besonders kompakt und einfach aufgebaut werden, der Zusammenhalt zwischen Handteil und Knieteil kann mittels jeder im Handstückbau übliche Verbindung erfolgen. Die Verbindung zwischen Knieteil und Handteil kann mittels üblicher Schnapp-Techniken, mittels einer Art Bajonettverschluß, mittels schraubbarer Überwurfhülsen u. dgl. erfolgen.

Varianten und weitere Ausbildungen sind in den Patentansprüchen beschrieben.

Die Erfindung wird im folgenden anhand der Zeichnung näher erläutert. Dabei zeigt
die Fig. 1 einen Schnitt durch eine erste Variante eines erfindungsgemäßen Winkelstückes,
die Fig. 2 eine Ansicht des Winkelstückes der Fig. 1 ohne Hüllen im Bereich des Kopfund des Handteiles,
die Fig. 3 eine Ansicht des zerlegten Handstückes des Winkelstückes der Fig. 1 nach Art einer Explosionsskizze,
die Fig. 4 eine schematische, teilweise geschnittene Darstellung in der Ebene einer anderen Ausbildung eines erfindungsgemäßen Winkelstückes und
die Fig. 5 einen Schnitt im wesentlichen normal zum Schnitt der Fig. 4 und die jeweiligen Drehachsen des Antriebsstranges enthaltend, wobei die Schnittführung und Darstellung, insbesondere im Bereich der Kronenverzahnung, nicht streng der geschilderten Schnittlinie folgt.

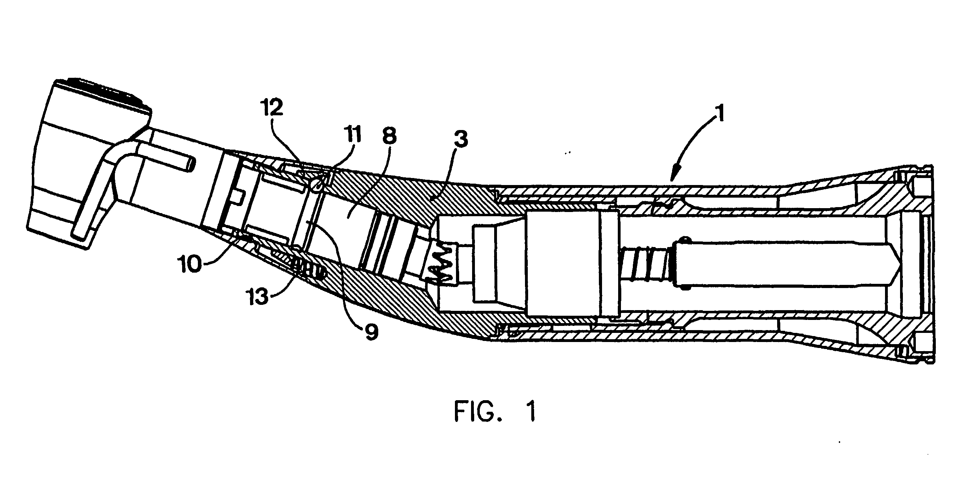

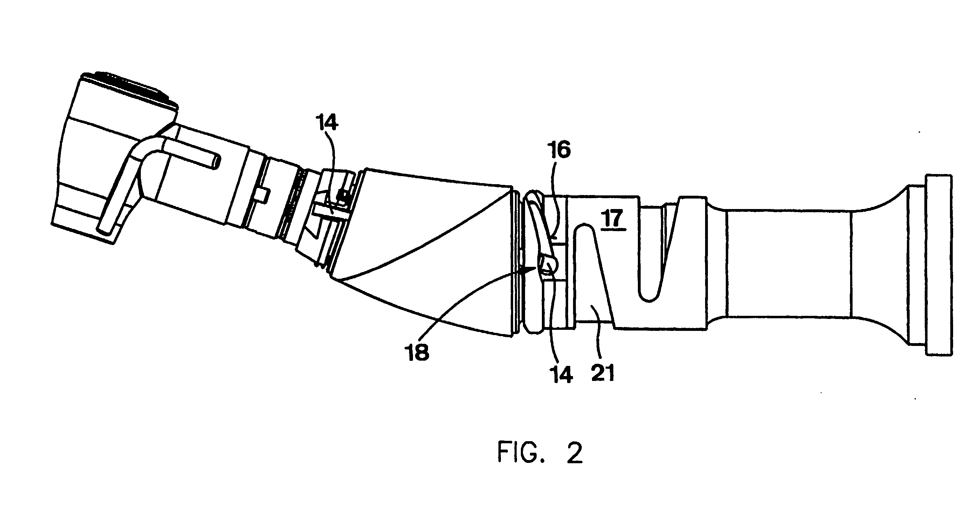

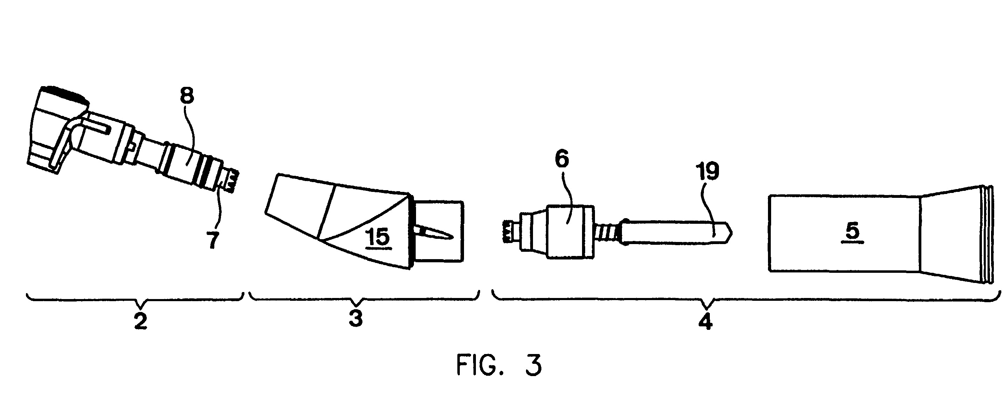

In Fig. 1 ist ein Schnitt durch ein erfindungsgemäß ausgebildetes Handstück 1 im zusammengebauten Zustand dargestellt, in Fig. 2 eine Draufsicht analog zur Fig. 1, aber teilweise ohne Außenverkleidung. Wie besser aus Fig. 3 ersichtlich ist das Handstück 1 auf die erfindungsgemäße Weise in drei Abschnitte bzw. Teile zerlegbar:

In einen Kopfteil 2, einen Knieteil 3 und einen Handteil 4. Bei der dargestellten Ausführungsform wird durch den erfindungsgemäßen Zerlegungsvorgang auch der Handteil 4 gleich in zwei Teile geteilt, einen Hülsenteil 5 und einen Antriebsteil 6. Am Kopfteil 2 verbleibt die zugehörige Welle 7, die mit ihrem als Kronenverzahnung ausgebildeten Endteil im zusammengebauten Zustand mit dem korrespondierend ausgebildeten Ende des Antriebsteiles 6 zusammenwirkt.

Die den Zusammenhalt gewährleistende erfindungsgemäße Vorrichtung ist am besten aus einer Zusammenschau der Fig. 1 und 2 ersichtlich:

Der Kopfteil 2 weist einen im wesentlichen zylindrischen, die Welle 7 umgebenden Rohrteil 8 auf, der mit einer Umfangsnut 9 versehen ist. Der Knieteil 3 ragt mit einem zylindrischen Fortsatz 10 über den Rohrteil 8. Der zylindrische Fortsatz 10 weist in dem Bereich, der im zusammengebauten Zustand des Handstückes 1 der Umfangsnut 9 gegenüberliegt, Öffnungen auf, in denen Sperrelemente, im gezeigten Ausführungsbeispiel Sperrkugeln 11, gelagert sind. Diesen Öffnungen und somit den Sperrkugeln 11 zugeordnet ist ein konischer Ring 12, der unter der Wirkung zumindest einer Feder 13 steht, die ihn in eine Richtung drängt, in der der Konus des konischen Ringes 12 den Sperrkugeln 11 eine radial nach außen gerichtete Bewegung, aus dem Bereich der Umfangsnut 9 heraus, erlaubt. Die Gesamtheit dieser Bauteile bildet so einen betätigbaren, knieteilseitigen Käfig 20 für die Sperrkugeln 11.

Mit dem konischen Ring 12 bevorzugt gelenkig verbunden sind zwei längliche Betätigungsorgane, die im gezeigten Ausführungsbeispiel als Zugstangen 14 ausgebildet sind (Fig. 2). Diese Zugstangen ragen auf dem dem Handteil 4 zugeordneten Ende des Knieteiles 3 soweit aus der Hülle 15 des Knieteiles 3, daß ihre Enden (im zusammengebauten Zustand des Winkelstückes 1) im Bereich einer Rampe 16 eines Rastelementes 17 im Inneren des Hülsenteiles 5 liegen.

Die Rampe 16 ist, wie insbesondere aus Fig. 2 ersichtlich, so ausgebildet, daß bei einer Verdrehung des Rastelementes 17 um etwa 90° bezüglich der dargestellten Lage das Ende der Rampe 16 in den Bereich der Zugstange 14 zu liegen kommt, wodurch eine Kerbe oder Aufbiegung der Zugstange bei Aufsetzen und Verdrehen des Rastelementes 17 in den Bereich der Rampe kommt und mit dieser so zusammenwirkt, daß die Zugstange 14 zum Handstück 4 hingezogen wird. Durch diese Bewegung wird der konische Ring 12 gegen die Kraft der Feder(n) 13 ebenfalls in Richtung zum Handteil 4 hingezogen und die Sperrkugeln 11 werden durch die ihnen zugeordneten Öffnungen in den Bereich der Umfangsnut 9 gedrängt. Durch diese Maßnahmen wird der Kopfteil 2 mit dem Handteil 4 unter Zwischenpositionierung des Knieteiles 3 vereint und es werden die drei Teile durch die Zugwirkung der Zugstange(n) 14 fest miteinander verbunden. Es ist dabei festzuhalten, daß das Rastelement 17 mit dem Handteil 4, insbesondere mit dessen Hülsenteil 5 fest oder zumindest drehfest verbunden ist.

Durch die geschilderte Vorrichtung wird nun erfindungsgemäß ein zerlegbares Handstück geschaffen, zu dessen Demontage und Montage keinerlei Werkzeug notwendig ist.

Durch die aus Fig. 2 ersichtliche Ausbildung der Rampe, die im Bereich der Verriegelt-Position eine leichte Mulde 18 aufweist, kann eine Demontage nur erfolgen, wenn die Zugstange 14 über den Rand dieser Mulde 18 in den eigentlichen Rampenbereich gelangt, wozu ein merkliches Moment notwendig ist, sodaß eine irrtümliche oder durch Vibrationen, Stöße oder dergleichen erfolgende unbeabsichtigte Entriegelung und damit Demontage nicht auftreten kann.

Im gezeigten Ausführungsbeispiel sind zwei Zugstangen 14, drei Sperrkugeln 11 und drei Federn 13 vorgesehen, doch sind auch andere Ausgestaltungen für den Fachmann ohne Problem ausführbar. So ist es insbesondere auch möglich statt der bzw. den Schraubfedem 9 eine Tellerfeder oder ein Tellerfederpaket vorzusehen, wodurch die Montage bei einer Totalzerlegung bzw. bei der Herstellung des Instrumentes erleichtert wird.

Im dargestellten Ausführungsbeispiel sind die Zugstangen 14 auf ihrer dem Kopfteil 2 zugewandten Seite in einer größeren Ausnehmung des konischen Ringes gelagert um die Bewegungen des konischen Ringes nicht zu behindern und um mit größeren Toleranzen arbeiten zu können. Im Inneren des Knieteiles 3 können die Zugstangen 14 ihre eigentliche Lagerung aufweisen, doch ist für ihr Funktionieren nur wesentlich, daß sie im Bereich ihres handteilseitigen Endes gegen Verdrehungen um die Handteilachse gesichert sind, um beim Verdrehen des Rastelementes 17 zuverläßig auf die Rampe 16 zu gelangen und sich nicht vor dieser Rampe liegend zu verdrehen.

Das Rastelement 17 weist in der dargestellten Ausführungsform zumindest eine schraubförmige Ausnehmung 21 auf, durch die es in axialer Richtung federn kann und so einerseits Toleranzen ausgleicht und anderseits das Aufbringen einer Vorspannung auf die Zugstangen 14 erlaubt.

Durch den erfindungsgemäßen Aufbau des Handstückes 1 ist es vorteilhaft und in den meisten Fällen notwendig, den Eingriffsteil 19 des Antriebsteiles 6 in axialer Richtung beweglich auszubilden, um die axialen Toleranzen der einzelnen Bauteile auszugleichen. Im gezeigten Ausführungsbeispiel erfolgt dies durch eine Druckfeder, die zwischen dem Lagerteil des Antriebsteiles 6 und dem Eingriffsteil 19 angeordnet ist. Durch diese federnde Anordnung darf selbstverständlich die Drehfestigkeit der Verbindung der beiden Teile der Welle nicht beeinträchtigt werden.

Es ist nicht notwendig, den axialen Ausgleich der Toleranzen so wie gezeichnet und beschrieben vorzunehmen, es stehen dem Fachmann auf dem Gebiete der medizinischen Handstücke in Kenntnis der Erfindung viele Maßnahmen zur Verfügung, um dies zu erreichen. Es muß auch die zumindest eine Feder 13 nicht vorhanden bzw. nicht wie dargestellt angeordnet sein, es kann auch eine Tellerfeder oder Federscheibe vorgesehen sein. Das Gleiche gilt von der schraubförmigen Ausnehmung 21, durch die das Rastelement 17 seine federnde Wirkung erhält.

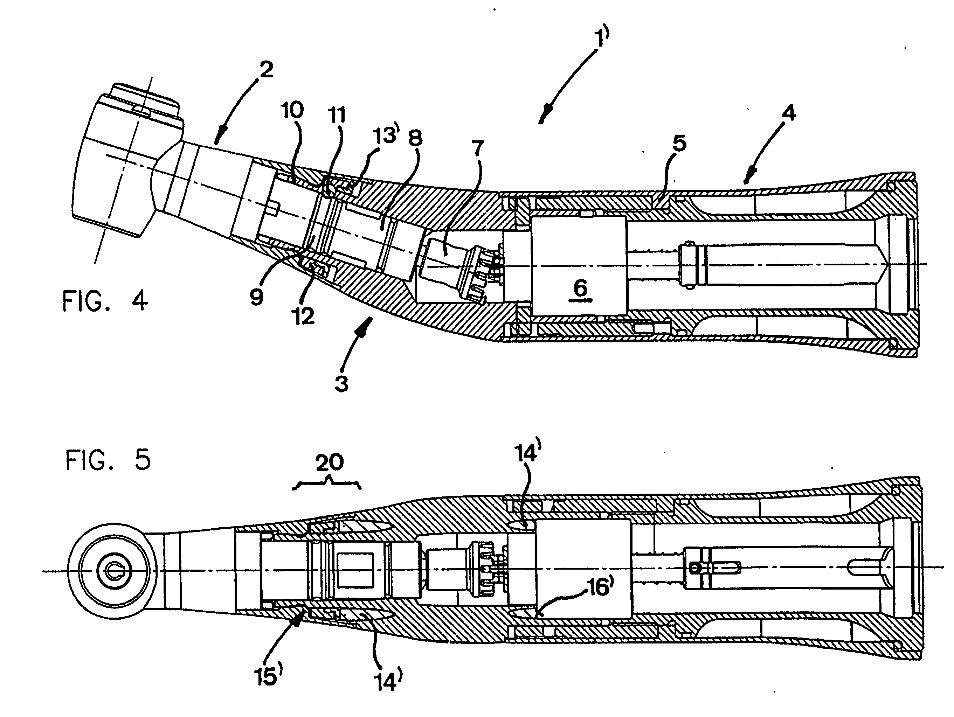

In den Fig. 4 und 5 ist eine erfindungsgemäße Variante dargestellt, bei der zwei längliche Betätigungsorgane vorgesehen sind, die als Druckstangen ausgebildet sind. Dabei sind gleiche Teile mit gleichen Bezugsziffern wie in den Fig. 1 bis 3 bezeichnet.

Das erfindungsgemäße Winkelstück 1' besteht im wesentlichen aus einem Kopfteil 2, einem Knieteil 3 und einem Handteil 4. Bei der dargestellten Ausführungsform besteht der Handteil 4 aus einem Hülsenteil 5 und einem Antriebsteil 6, der im Inneren des Hülsenteiles 5 angeordnet ist. Im Knieteil 3 und im Kopfteil 2 läuft eine Welle 7, die am kopffernen Ende mit einer Kronenverzahnung mit dem kopfseitigen Ende des Antriebsteiles 6 zusammenwirkt und so den Antrieb des eigentlichen Werkzeuges (nicht dargestellt) besorgt.

Im Kopfteil 2 befindet sich auch ein im wesentlichen zylindrischer, die Welle 7 umgebender Rohrteil 8, der mit einer Umfangsnut 9 versehen ist. Es ist möglich, statt dieser Umfangsnut Ausnehmungen, beispielsweise kalottenförmige Ausfräsungen, an passenden Stellen vorzusehen. Der Knieteil 3 ragt mit einem zylindrischen Fortsatz 10 über den Rohrteil 8. Der zylindrische Fortsatz 10 weist in dem Bereich, der im zusammengebauten Zustand des Handstückes 1' der Umfangsnut 9 gegenüberliegt, Öffnungen auf, in denen Sperrelemente, im gezeigten Ausführungsbeispiel Sperrkugeln 11, gelagert sind. Diesen Öffnungen und somit auch den Sperrkugeln 11 zugeordnet ist ein zumindest im Bereich der Sperrkugeln konischer Ring 12, der die Sperrkugeln 11 radial nach innen, in den Bereich der Umfangsnut 9 (oder der einzelnen Ausnehmungen) hinein, drängt.

Es kann zusätzlich zumindest eine Feder mit geringer Kraft vorgesehen werden, im dargestellten Ausführungsbeispiel ist dies eine in der Zeichnung kaum sichtbare Federscheibe zwischen dem konischen Ring 12 und einem Ringbund 13' mit L-förmigern Querschnitt, die den konischen Ring 12 in eine Richtung drängt, in der sein Konus die Sperrkugeln 11 radial leicht nach innen drückt und mit der Ringnut ein leichtes Einrasten ermöglicht. Das heißt, daß der Kopfteil 2 und der Knieteil 3 in ihrer Lage zueinander fixiert sind und ein unbeabsichtigtes Lösen verhindert ist, doch können die beiden Teile durch Aufbringen eines leichten axialen Zuges voneinander getrennt werden. Die Gesamtheit dieser Bauteile bildet so einen Käfig 20 für die Sperrkugeln 11, der sich am Knieteil 3 des erfindungsgemäßen Winkelstückes 1' befindet.

Betätigbar ist dieser knieteilseitige Käfig 20 mittels zumindest einer Druckstange 14', im dargestellten Ausführungsbeispiel sind es zwei Druckstangen, die den konischen Ring 12 über den Ringbund 13' und die Feder in eine Position bringen, in der die Sperrkugeln 11 radial nach innen, in die Umfangsnut 9 hinein gedrängt werden, wodurch sie eine sichere und lagegenaue Verriegelung zwischen dem Kopfteil 2 und dem Knieteil 3 sicherstellen. Die Bewegung der Druckstangen 14 wiederum erfolgt durch den Zusammenbau des Handteiles 4 mit dem Knieteil 3, wobei Stirnflächen 16' die rückwärtigen Enden der Druckstangen 14 zum Kopf hin gegen die Kraft der Feder verschieben. Die Stirnflächen 16' müssen nicht diskret und speziell am Antriebsteil 6 oder am Hülsenteil 5 vorgesehen sein, sondern können einfach durch eine dort vorgesehene Schulter, einen Absatz od.dgl. gebildet werden.

Die Verbindung zwischen Handteil 4 und Knieteil 3 kann auf übliche Weise erfolgen, beispielsweise mittels einer Clipsverbindung, die durch elastische Deformation das Überschieben eines Hülsenteiles erlaubt, wobei das Lösen entweder durch eine Drehbewegung, durch Betätigung eines Freigabemechanismus oder durch Aufbringen stärkerer Zugkräfte erfolgt, es kann auch vorgesehen sein, die Verbindung durch eine Art Überwurfhülse mittels einer Schraubverbindung zu bewirken oder durch eine andere aus dem Stand der Technik bekannte Verbindung.

Um das Zusammenbauen zu erleichtern, kann wie, bei der Verbindung zwischen Kopfteil 2 und Knieteil 3 mit dem Bezugszeichen 15' angedeutet, eine Clips- oder Bajonettverbindung vorgesehen sein, die diese beiden Teile in ihrer richtigen Lage zueinander sichert, bis die Sperrkugeln 11 diese Aufgabe mit ausreichender Kraft und Genauigkeit übernehmen.

Solange die Druckstangen 14' nicht durch den Anschluß des Handteiles 4 an den Knieteil 3 zum Kopfteil 2 hin gedrängt werden, ist auch der Ringbund 13' relativ frei beweglich und die Feder, deren Federweg klein ist, gibt auch den konischen Ring 12 soweit frei, daß die Sperrkugeln 11 aus der Umfangsnut 9 radial nach außen treten können und so eine Trennung des Knieteiles 3 vom Kopfteil 2 ermöglichen.

Die Feder selbst trägt zwar zur leichteren Montage bei, ist aber dem Grunde nach zum Ausgleich der auftretenden Toleranzen in Längsrichtung des zusammengebauten Handstückes 1 vorgesehen.

Die Erfindung ist nicht auf das dargestellte Ausführungsbeispiel beschränkt, sondern kann verschiedentlich abgewandelt werden. So ist es, wie bereits angedeutet, möglich, ohne die Feder zwischen dem Ringbund 13' und dem konischen Ring 12 auszukommen, wenn man die Toleranzen entsprechend eng hält. In diesem Fall kann man auch auf den Ringbund verzichten, bzw. ihn mit dem konischen Ring zu einem Bauteil vereinen. Es kann dann, wenn doch ein Ausgleich der Toleranzen gewünscht wird, beispielsweise eine Ausgleichsfeder zwischen dem Knieteil 3 und dem Handteil 4 vorgesehen sein.

Bei Verwendung des dargestellten Aufbaues ist es günstig, die axiale Beweglichkeit des Ringbundes 13' merklich größer zu wählen als den Federweg der Feder, um dann, wenn die Druckstangen 14 nicht an der Stirnfläche 16 anliegen, den konischen Ring soweit bewegen zu können, daß er den Sperrkugeln 11 eine genügend große radiale Beweglichkeit ermöglicht, um den Kopfteil 2 bequem vom Knieteil 3 trennen zu können.

Es muß die Dimensionierung und Lagerung der Verriegelungselemente nicht so wie dargestellt erfolgen, sondern kann, insbesondere wenn keine kugelförmigen Verriegelungselemente verwendet werden, anders gewählt sein.

Als Material für den Käfig, die Kugeln und die Betätigungselemente eignen sich alle dem Fachmann auf dem Gebiete des medizinischen Instrumentenbaues bekannten, in ähnlichen Situationen verwendeten Materialien, in Kenntnis der Erfindung kann er leicht seine Auswahl treffen.

## Patentansprüche

1. Zerlegbares zahnärztliches oder chirurgisches Winkelstück (1,1'), umfassend einen Kopfteil (2), einen Knieteil (3) und einen Handteil (4), **dadurch gekennzeichnet, daß** im Knieteil (3) ein axial zwischen zwei Positionen, von denen die eine einer Verriegelt-Position und die andere einer Entriegelt-Position entspricht, beweglicher Käfig (12) vorgesehen ist, in dem zumindest ein Verriegelungselement (11) radial beweglich gelagert ist, das in Abhängigkeit von der Position, die der Käfig (12) einnimmt, eine innere oder eine äußere Lage einnimmt, und daß im Knieteil (3) zumindest ein längliches Betätigungsorgan (14,14') im wesentlichen axial verschieblich gelagert ist, das einerends mit dem Käfig (12) und anderends mit einer Betätigungsfläche (16,16') des Handteiles (4) zusammenwirkt.

2. Winkelstück nach Anspruch 1, **dadurch gekennzeichnet, daß** das zumindest eine längliche Betätigungsorgan (14) eine Zugstange ist, die handteilseitig mit einer Rampe (16) eines drehbaren Rastelementes (17) des Handteiles (4) zusammenwirkt.

3. Winkelstück nach Anspruch 2, **dadurch gekennzeichnet, daß** das Rastelement (17) zumindest eine schraubförmige Ausnehmung (21) aufweist.

4. Winkelstück nach Anspruch 2 oder 3, **dadurch gekennzeichnet, daß** im zusammengebauten Zustand des Handstückes (1) das handteilseitige Ende der zumindest einen Zugstange (14) in einer Mulde (18) der sie haltenden Rampe (16) des Rastelementes (17) liegt.

5. Winkelstück nach einem der vorangehenden Ansprüche, **dadurch gekennzeichnet, daß** zwei Zugstangen (14) vorgesehen sind, die einander im Bereich des Käfigs im wesentlichen diametral bezüglich der Achse des Handstückes gegenüberliegen.

6. Winkelstück nach Anspruch 1, **dadurch gekennzeichnet, daß** das zumindest eine längliche Betätigungsorgan (14') eine Druckstange ist, die handteilseitig mit einer Stirnfläche (16) des Handteiles (4) zusammenwirkt.

7. Zahnärztliches Winkelstück nach Anspruch 6, **dadurch gekennzeichnet, daß** die Druckstange(n) (14') auf einen Ringbund (13') wirkt (wirken), der die Druckkräfte mittels einer Feder auf den Käfig (12) überträgt.

8. Winkelstück nach einem der vorangehenden Ansprüche, **dadurch gekennzeichnet, daß** die Verriegelungselemente (11) Kugeln sind.

9. Winkelstück nach einem der vorangehenden Ansprüche, **dadurch gekennzeichnet, daß** die Verriegelungselemente in ihrer radial inneren Lage in eine Einkerbung des Kopfteiles (2), die eine Umfangsnut (9) sein kann, ragen.

10. Winkelstück nach einem der vorangehenden Ansprüche, **dadurch gekennzeichnet, daß** der Käfig ein konischer Ring (12) ist, der unter der Wirkung zumindest einer Feder (13) steht, die ihn in eine Richtung drängt, in der der Konus des konischen Ringes (12) den Verriegelungselementen (11) eine radial nach außen gerichtete Bewegung, aus dem Bereich der Einkerbung heraus, erlaubt.

## Claims

1. A separable dental or surgical elbow (1,1'), comprising a head part (2), a knee part (3) and a hand part (4), **characterised in that** in the knee part (3) there is provided a cage (12) which is movable axially between two positions, one of which corresponds to a locked position and the other of which corresponds to an unlocked position, in which cage at least one locking element (11) is mounted radially movably and, which depending on the position occupied by the cage (12) occupies an inner or outer position, and **in that** at least one elongate actuating member (14,14') is mounted substantially axially displaceably in the knee part (3), which actuating member co-operates at one end with the cage (14) and at the other end with an actuating surface (16,16') of the hand part (4).

2. An elbow according to Claim 1, **characterised in that** the at least one elongate actuating member (14) is a tension rod which on the hand-part side co-operates with a ramp (16) of a rotatable detent element (17) of the hand part (4).

3. An elbow according to Claim 2, **characterised in that** the detent element (17) has at least one helical recess (21).

4. An elbow according to Claim 2 or 3, **characterised in that** in the assembled condition of the elbow (1) the end of the at least one tension rod (14) on the hand-part side is situated in a hollow (18) of the ramp (16) of the detent element (17) retaining it.

5. An elbow according to any one of the preceding Claims, **characterised in that** two tension rods (14) are provided, which are disposed in the vicinity of the cage substantially diametrically opposite one another with respect to the axis of the elbow.

6. An elbow according to Claim 1, **characterised in that** the at least one elongate actuating member (14') is a push rod which co-operates on the hand-part side with an end face (16) of the hand part (4).

7. An elbow according to Claim 6, **characterised in that** the push rod(s) (14') act(s) on an annular, flange (13') which transmits the compressive forces to the cage (12) by means of a spring.

8. An elbow according to any one of the preceding Claims, **characterised in that** the locking elements (11) are balls.

9. An elbow according to any one of the preceding Claims, **characterised in that** in their radially inner position the locking elements protrude into an indentation in the head part (2), which may be a peripheral groove (9).

10. An elbow according to any one of the preceding Claims, **characterised in that** the cage is a conical ring (12) which is under the action of at least one spring (13) which urges the ring in a direction in which the cone of the conical ring (12) allows the locking elements (11) a radially outwardly directed movement from the region of the indentation.

## Revendications

1. Contre-angle dentaire ou chirurgical démontable (1, 1') comprenant une partie de tête (2), une partie coudée (3) et une partie de poignée (4), **caractérisé en ce que** dans la partie coudée (3) est prévue une cage (12) mobile axialement entre deux positions dont l'une correspond à une position verrouillée et l'autre à une position déverrouillée, et dans laquelle est monté radialement mobile, au moins un élément de verrouillage (11) qui, en fonction de la position que prend la cage (12), prend une position intérieure ou une position extérieure, et **en ce que** dans la partie coudée (3) est monté de manière à pouvoir coulisser sensiblement dans la direction axiale, au moins un organe d'actionnement (14, 14') de forme allongée, qui interagit, à une extrémité, avec la cage (12), et à l'autre extrémité, avec une surface d'actionnement (16, 16') de la partie de poignée (4).

2. Contre-angle selon la revendication 1, **caractérisé en ce que** ledit au moins un organe d'actionnement (14) est un tirant qui, côté partie de poignée, interagit avec une rampe (16) d'un élément d'encliquetage rotatif (17) de la partie de poignée (4).

3. Contre-angle selon la revendication 2, **caractérisé en ce que** l'élément d'encliquetage (17) présente au moins un évidement en forme d'hélice.

4. Contre-angle selon la revendication 2 ou 3, **caractérisé en ce que** dans l'état assemblé du contre-angle ou de l'ensemble de poignée (1), l'extrémité côté partie de poignée dudit au moins un tirant (14) se situe dans une cavité (18) de la rampe (16) de l'élément d'encliquetage (17), qui maintient ledit tirant.

5. Contre-angle selon l'une des revendications précédentes, **caractérisé en ce que** sont prévus deux tirants (14) qui, dans la zone de la cage, sont sensiblement diamétralement opposés relativement à l'axe de l'ensemble de poignée.

6. Contre-angle selon la revendication 1, **caractérisé en ce que** ledit au moins un organe d'actionnement allongé (14') est une tige de compression qui, côté partie de poignée (4), interagit avec une surface frontale (16) de la partie de poignée (4).

7. Contre-angle selon la revendication 6, **caractérisé en ce que** la ou les tiges de compression (14') agit ou agissent sur une collerette annulaire (13'), qui transmet les forces de compression à la cage (12) par l'intermédiaire d'un ressort.

8. Contre-angle selon l'une des revendications précédentes, **caractérisé en ce que** les éléments de verrouillage (11) sont des billes.

9. Contre-angle selon l'une des revendications précédentes, **caractérisé en ce que** les éléments de verrouillage, dans leur position radialement intérieure, s'engagent dans une encoche de la partie de tête (2), qui peut être une rainure périphérique (9).

10. Contre-angle selon l'une des revendications précédentes, **caractérisé en ce que** la cage est une bague conique (12) soumise à l'action d'au moins un ressort (13) qui la repousse dans une direction dans laquelle le cône de la bague conique (12) permet aux éléments de verrouillage (11), un mouvement dirigé radialement vers l'extérieur, hors de la zone de l'encoche.
